# FASCICULE DE BREVET EUROPEEN

(11) **EP 1 851 150 B1**
(45) Date de publication et mention de la délivrance du brevet: **17.12.2008**
(21) Numéro de dépôt: 06709498.7
(22) Date de dépôt: 10.02.2006
(51) Int. Cl.: B65G 69/04

(54) **DISPOSITIF DE DISTRIBUTION D'AU MOINS UN MATERIAU GRANULAIRE DANS UN RECIPIENT, DISPOSITIF DE REMPLISSAGE ET PROCEDE DE REMPLISSAGE UTILISANT UN TEL DISPOSITIF**
VORRICHTUNG ZUR AUSGABE VON MINDESTENS EINEM GRANULATPRODUKT IN EINER BEHÄLTERFÜLLVORRICHTUNG UND VERFAHREN ZUM FÜLLEN EINER SOLCHEN VORRICHTUNG
DEVICE FOR DISTRIBUTION OF AT LEAST ONE GRANULAR PRODUCT IN A CONTAINER FILLING DEVICE AND METHOD FOR FILLING USING SUCH A DEVICE

(30) Priorité: 14.02.2005 FR 0550418
(43) Date de publication de la demande: 07.11.2007
(73) Titulaire: COMMISSARIAT A L'ENERGIE ATOMIQUE, 75015 Paris (FR)
(72) Inventeur: REVIRAND, Pascal, 38120 Saint Egreve (FR); FEDERZONI, Luc, 38300 Bourgoin-Jallieu (FR)
(74) Mandataire: Poulin, Gérard
(86) Numéro de dépôt international: PCT/FR2006/050119
(87) Numéro de publication internationale: WO 2006/085035

(56) Documents cités:
- BE-A2- 899 420
- FR-A- 2 582 955
- US-A- 4 318 511
- US-A- 5 393 189
- US-A- 5 687 780
- PATENT ABSTRACTS OF JAPAN vol. 007, no. 081 (M-205), 5 avril 1983 (1983-04-05) & JP 58 006844 A (HITACHI SEISAKUSHO KK), 14 janvier 1983 (1983-01-14)

## Description

### DOMAINE TECHNIQUE ET ART ANTÉRIEUR

La présente invention se rapporte principalement à un dispositif de distribution d'au moins un matériau granulaire dans un récipient, à un dispositif de remplissage et à un procédé de remplissage mettant en oeuvre un tel dispositif.

Le remplissage de récipients par des matériaux granulaires s'effectue de manière habituelle par un tuyau de section circulaire raccordé par une extrémité supérieure à un réservoir de matériau granulaire. Or, les matériaux de type granulaire peuvent présenter une mauvaise coulabilité du fait de leur granulométrie, de leur rugosité intrinsèque et/ou de leur densité. Ce type de remplissage n'est alors pas satisfaisant pour assurer un remplissage uniforme du moule, d'autant plus dans le cas de moules à géométrie complexe.

Il a été proposé d'améliorer la coulabilité des matériaux par fluidisation de ceux-ci, par exemple au moyen d'un flux d'air. Cependant les moyens à mettre en oeuvre sont complexes.

Dans le document FR 2 431 449, il a été proposé un dispositif de distribution de matériaux sous forme granulaire, comportant un arbre entraîné en rotation autour de son axe et disposé en dessous d'une trémie d'alimentation, muni à son extrémité opposée à la trémie, de bandes caoutchouc aptes à s'incliner par rapport à l'axe de l'arbre, lorsque celui-ci est entraîné en rotation. Ces bandes forment des déflecteurs qui suivant la vitesse de rotation de l'arbre, dévient plus ou moins de granulés de leur trajectoire verticale. Ainsi, les granulés sont distribués de manière uniforme dans le récipient. Cependant le remplissage obtenu par ce dispositif est encore imparfait, puisque d'une part, il y a un manque de matériau dans le récipient à la verticale de l'arbre, et d'autre part le remplissage n'est pas uniforme pour des récipients de forme complexe. En effet, ce dispositif est relativement performant pour des récipients en forme de cylindre régulier, cependant il l'est beaucoup moins pour des récipients comportant des coins, telles que des récipients parallélépipédiques.

Le document JP 58006844 décrit un dispositif de remplissage d'un silo comportant une goulotte délimitée par des surfaces inclinées en éloignement d'un axe de rotation de la goulotte.

C'est par conséquent un but de la présente invention d'offrir un dispositif de remplissage et un procédé de remplissage permettant un remplissage uniforme de tout type de récipient, en particulier de récipient comportant des coins.

### EXPOSÉ DE L'INVENTION

Ce but est atteint par un dispositif de remplissage muni de moyens déflecteurs formés par au moins une surface de déflexion bordant un canal. La surface de déflexion dévie une partie du matériau granulaire vers l'extérieur de manière à remplir les parties plus extérieures du récipient et le canal rempli des parties plus intérieures du récipient.

Grâce à la présente invention, une meilleure distribution du matériau dans les parties peu accessibles du récipient, en particulier les coins, est obtenue.

La présente invention a alors principalement pour objet un dispositif de distribution d'au moins un matériau granulaire, comportant des moyens déflecteurs d'une partie du matériau, lesdits moyens déflecteurs étant mobiles en rotation autour d'un axe caractérisé en ce que les moyens déflecteurs sont formés par au moins une surface de déflexion bordant au moins un passage; de manière à ce que la part de matériau non déviée, emprunte le passage, la surface de déflexion étant inclinée en direction de l'axe de rotation dans une direction générale d'écoulement du matériau.

En particulier, le dispositif de répartition est destiné à être interposé entre une source d'alimentation dudit matériau granulaire et un récipient à remplir.

En outre, la part de matériau déviée et la part de matériau empruntant le passage sont fonction de la vitesse de rotation des moyens déflecteurs.

De manière avantageuse, les moyens déflecteurs entourent de manière continue l'extrémité d'entrée dudit passage.

Dans un premier exemple de réalisation, la surface de déflection est un cône dont les génératrices sont des lignes droites.

Dans un deuxième exemple de réalisation, la surface de déflection est concave.

Dans un troisième exemple de réalisation, la surface de déflection est convexe.

De manière avantageuse, on peut prévoir que la section de la surface selon un plan orthogonal à l'axe de rotation soit un cercle, une ellipse, ou une forme sensiblement rectangulaire.

En outre, il est envisageable que le passage ait par exemple la forme d'un cylindre régulier, d'un cône orienté vers les moyens déflecteurs ou d'un cylindre de directrice ellipsoïdale.

Dans un mode particulier de réalisation, le dispositif de répartition comporte un arbre central coaxial à l'axe de rotation raccordé aux moyens déflecteurs par au moins un bras, ou par au moins une pale. La pale peut être inclinée par rapport à l'axe de rotation ou contenue dans un plan contenant l'axe de rotation.

De manière avantageuse, la surface de déflection comporte des lumières, mettant en communication un espace intérieur délimité par la surface avec un environnement extérieur. De manière préférée, ces lumières sont sensiblement parallèles à l'axe de rotation et réparties de manière régulière angulairement autour de l'axe de rotation. Selon un premier exemple de réalisation, les lumières s'étendent sur toute une hauteur du dispositif de distribution selon l'axe de rotation. Selon un deuxième exemple de réalisation, les lumières s'étendent sur une partie seulement de la hauteur du dispositif.

La présente invention a également pour objet un dispositif de remplissage de récipients par au moins un matériau granulaire comportant une trémie d'alimentation et un dispositif de distribution selon la présente invention, le dispositif de distribution étant interposé entre la trémie d'alimentation et un récipient à remplir.

La présente invention a également pour objet un procédé de remplissage d'un récipient par un matériau granulaire avec un dispositif de remplissage selon la présente invention, comportant entre autres les étapes :
- de mise en place du dispositif de répartition et de la trémie en regard de l'ouverture du récipient ;
- de mise en rotation des moyens déflecteurs selon une vitesse;
- d'alimentation en au moins un matériau granulaire par ouverture de la trémie.

On peut prévoir que lors du remplissage, la vitesse de rotation soit variable selon une séquence prédéterminée.

Enfin, en variante le dispositif de distribution est disposé, à l'intérieur du récipient.

### BRÈVE DESCRIPTION DES DESSINS

La présente invention sera mieux comprise à l'aide de la description qui va suivre et des dessins annexés, sur lesquels :
- les figures 1a à 3b sont des représentations schématiques de trois types de remplissages obtenus avec le dispositif selon la présente invention,
- les figures 4 à 15 sont des exemples de réalisation d'un dispositif selon la présente invention,
- la figure 16 est vue en coupe d'un dispositif de répartition selon la présente invention associé à un moyen de concentration.

### EXPOSÉ DÉTAILLÉ DE MODES DE RÉALISATION PARTICULIERS

Les matériaux de type granulaire sont entendus dans le présent exposé comme tous matériaux formés d'un ensemble d'éléments distincts de tailles uniformes ou variables, par exemple comprises entre quelques nanomètres et plusieurs centimètres. Les matériaux en poudre sont bien entendu couverts par cette expression.

Sur les figures la à 3b, on peut voir un récipient 2, de forme parallélépipédique, muni d'une ouverture 4 dans sa partie supérieure, une trémie d'alimentation 6 en matériau granulaire 8 disposée au dessus dudit récipient au droit de l'ouverture 4. Un dispositif de répartition 10 selon la présente invention est interposé entre la trémie 6 et le récipient 2, de manière à recevoir par une extrémité supérieure 12, le matériau granulaire de la trémie 6 et à distribuer ledit matériau dans le récipient 2 par l'ouverture 4.

Dans l'exemple représenté, le dispositif 10 est disposé à l'intérieur du récipient, mais il est bien entendu qu'il peut être disposé au dessus du récipient.

La trémie 6 est, par exemple raccordée à un ou plusieurs réservoirs (non représentés) de matériaux granulaires.

De manière avantageuse, le dispositif de répartition 10 se déplace avec la trémie 6.

Le dispositif 10 comporte un corps 11, muni d'un passage 14 s'étendant sensiblement selon axe Y, de l'extrémité supérieure 12 à une extrémité inférieure 16, permettant l'écoulement des granulés de la trémie vers le récipient par l'intérieur du dispositif 10.

Le dispositif comporte également des moyens déflecteurs 18 disposés en amont du passage 14 de manière à border l'entrée du passage 14. Les moyens déflecteurs 18 sont destinés à être entraînés en rotation autour de l'axe Y selon une vitesse ω, susceptible de varier dans le temps.

Les déflecteurs sont formés par au moins une surface 20 de déflection inclinée par rapport à l'axe Y de manière à ce qu'elle se rapproche de l'axe Y dans le sens d'écoulement des granulés. La surface est réalisée avantageusement à l'intérieur du dispositif.

En d'autres termes, en considérant un premier point P1 et un deuxième point P2 de ladite surface, le premier point P1 disposé le plus près de la trémie 6, se trouve plus éloigné de l'axe Y que le deuxième point P2 disposé plus loin de la trémie 6.

De manière avantageuse, ladite surface entoure de manière continue l'axe Y.

Il est bien entendu que les moyens déflecteurs 18 peuvent être composés de plusieurs surfaces 20 discontinues se raccordant.

Ainsi suivant la vitesse de rotation ω des moyens déflecteurs 18, une proportion plus ou moins importante des granulés est expulsée vers l'extérieur du dispositif de répartition, frappent les parois du récipient et remplissent des parties 22 les plus extérieures du récipient et le reste des granulés s'écoule par le passage 14 entouré par les moyens déflecteurs 18, remplissant alors une partie centrale 24 du récipient 2, disposée au droit du passage 14. Ainsi les granulés non déviés par les moyens déflecteurs, sont guidés par la surface de déflexion 20 des moyens déflecteurs 18 en direction du passage 14. La surface 20 remplit alors à la fois la fonction de déflecteur et de guide.

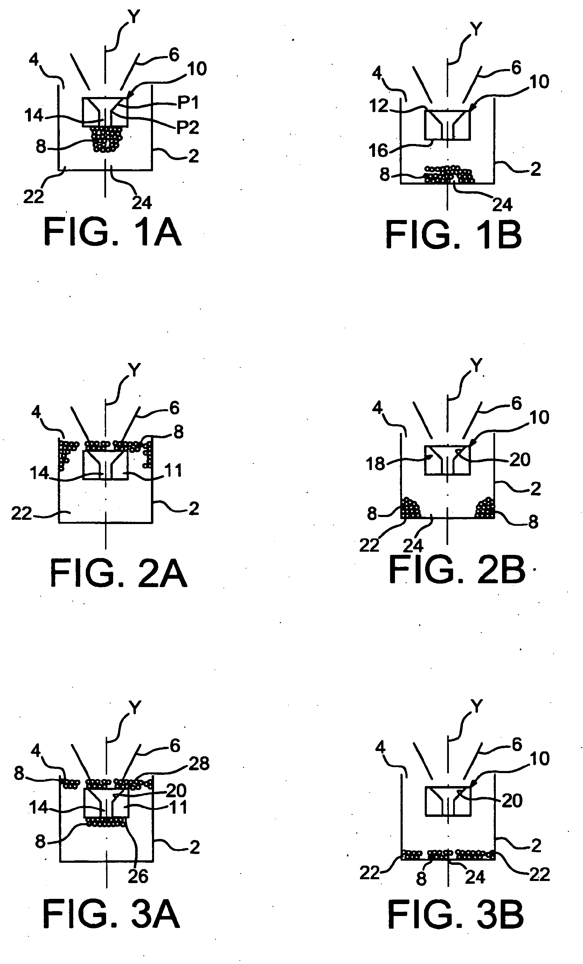

Pour une vitesse inférieure à 500 tours/minute, par exemple 250 tours/minute, tous les granulés empruntent le passage 14 et tombent au centre 24 du fond du récipient (Figure 1a et 1b).

Pour une vitesses ω supérieure à 1000t/minute, par exemple 2500 tours/minute, tous les granulés sont déviés par les déflecteurs 18 et retombent sur les parties 22 disposées le long des parois (Figures 2a et 2b).

Pour une vitesse ω intermédiaire, par exemple 600 à 800 tours/minute, une partie 26 des granulés passe par le passage 14 et une autre partie 28 est déviée. Le remplissage est alors uniforme (Figures 3a et 3b).

Grâce à la présente invention, le remplissage est possible avec tout type de matériaux granulaires, quelque soit leur granulométrie, leur densité et leur coulabilité.

Il est bien entendu que les moyens déflecteurs 18 et le corps 11 peuvent être solidaires en rotation. Ainsi tout le dispositif tourne autour de l'axe Y. De manière avantageuse, le corps 11 et les moyens déflecteurs 18 sont réalisés en une seule pièce.

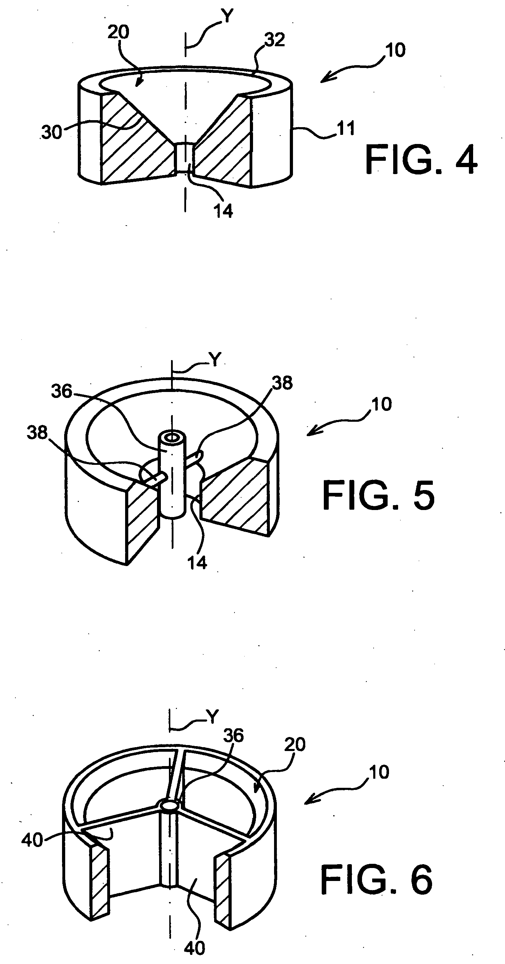

Sur les figures 4 à 13, on peut voir différents exemples de moyens déflecteurs.

Sur la figure 4, le corps 11 a la forme d'un cylindre régulier dans lequel est pratiqué un passage 14 en forme de cylindre régulier d'axe Y et une surface 20 de forme conique, de conicité orientée vers le bas, les génératrices du cône étant des droites 30 et la base 32, un cercle régulier.

Sur la figure 5, la surface 20 est la même que celle de la figure 1, cependant, le dispositif comporte un arbre 36 d'axe Y destiné à entraîner le dispositif en rotation et raccordé au corps 20 par deux bras 38 diamétralement opposés.

Dans l'exemple de la figure 6, les bras 38 ont été remplacés par trois pales 40 s'étendant radialement à partir de l'arbre 36 et contenues dans des plans contenant l'axe Y.

Il est bien entendu, qu'un dispositif comportant un bras ou plus de deux bras ne sort pas du cadre de la présente invention. De même, pour un dispositif comportant une pale, deux pales ou plus de trois pales. En outre, les pales peuvent être inclinées par rapport à l'axe Y, être planes ou courbées.

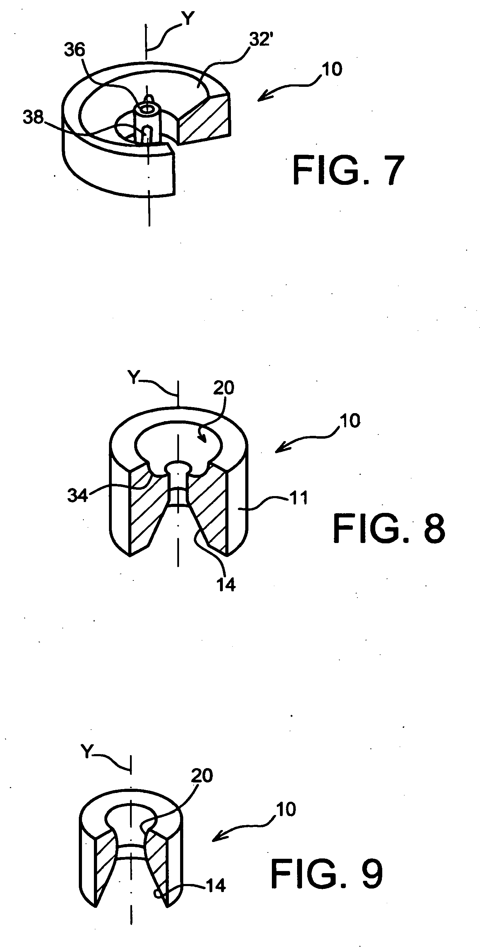

Sur la figure 7, la surface est également conique cependant la base 32' est ellipsoïdale.

Sur la figure 8, le corps 11 a également la forme d'un cylindre régulier. La surface 20 est de forme conique, de conicité orientée vers le bas, les génératrices du cône étant des courbes concaves 34 définissant une cuvette. Dans cet exemple, le passage 14 est de forme conique orientée vers le haut.

Sur la figure 9, la surface 20 est convexe et se raccorde à un passage 14 qui est également de forme conique orientée vers le haut.

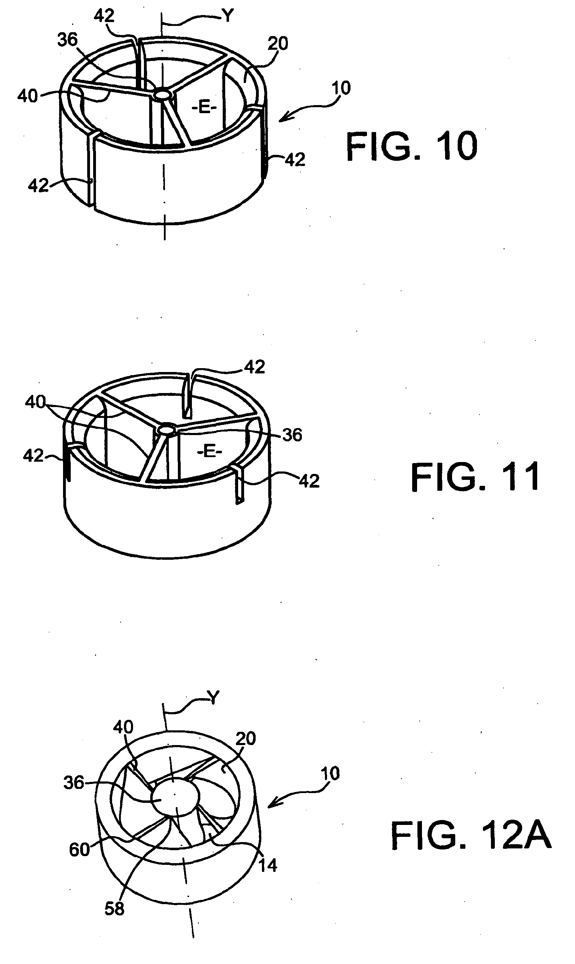

Sur les figures 10 et 11, la surface 20 est également convexe. Le dispositif 10 comporte également des lumières 42 s'étendant selon des axes parallèles à l'axe Y et mettant en communication un espace E défini par la surface 20 à l'intérieur du corps 11 et un environnement extérieur. Les lumières 42 améliorent l'écoulement du matériau granulaire 8.

Selon un premier exemple de réalisation représenté en figure 10, les lumières 42 s'étendent sur toute la hauteur du dispositif de distribution.

Selon un deuxième exemple de réalisation, les lumières 42 s'étendent partiellement le long du corps 11, environ jusqu'à la moitié de la hauteur du corps.

Dans les exemples représentés, les lumières sont au nombre de trois régulièrement réparties autour de l'axe Y, mais il est bien entendu que leur nombre peut être inférieur ou supérieur à trois.

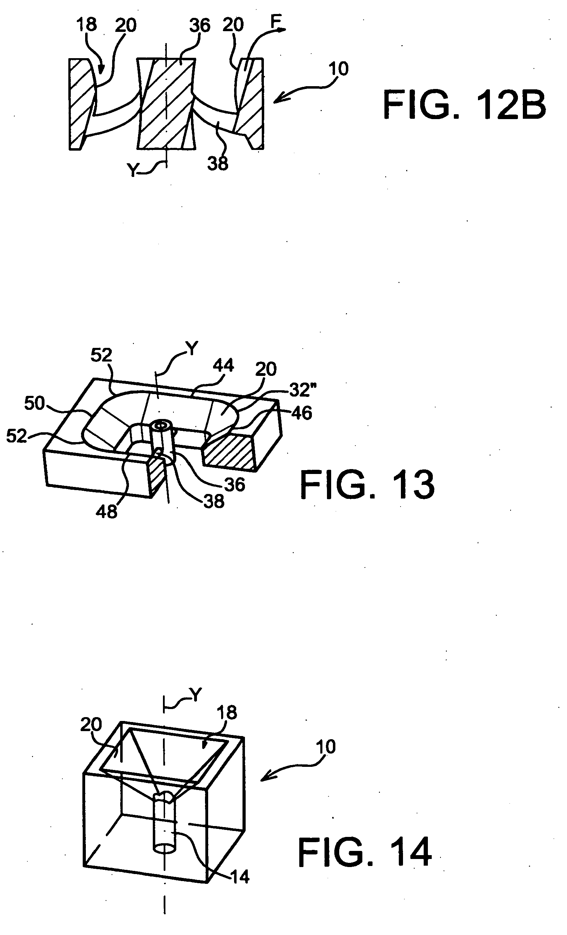

Sur les figures 12a et 12b, le dispositif comporte des moyens déflecteurs 18 de forme convexe, un arbre central 36 raccordé au corps 11 par des pales 40 par rapport à l'axe Y. Dans l'exemple représenté, les pales 40 comportent un côté intérieur 58 se raccordant à l'arbre 36 et un côté extérieur 60 se raccordant aux moyens déflecteurs 18, inclinés par rapport à l'axe Y. Dans l'exemple représenté, les côtés ont des angles d'inclinaison respectifs différents. Sur la figure 12b, la trajectoire d'un granulé est représentée par la flèche F après sa déflexion contre la surface 20.

Sur la figure 13, le dispositif comporte une surface 20 conique, de base 32'' sensiblement en forme de rectangle, des côtés 44, 46, 48, 50 du rectangle sont raccordés par des arcs de cercles 52 de manière à ce que la surface 20 soit continue. Le dispositif comporte également un arbre 36 relié au corps 11 par des bras 38 diamétralement opposés. Le corps 11 a également une forme sensiblement rectangulaire.

De manière avantageuse, le passage 14 a une section selon un plan orthogonal à l'axe Y (appelée section du passage) correspondant à la section de la surface selon un plan orthogonal à l'axe Y (appelée section de la surface). Ainsi, si la section de la surface 20 est un cercle, le passage est avantageusement formé par un cylindre régulier ; si la section de la surface 20 est une ellipse, le passage 14 est alors de manière préférée un cylindre de directrice une ellipse, etc... . Cependant il est bien entendu que l'on peut avoir, par exemple, une surface de section circulaire et un passage de section elliptique ou rectangulaire, d'autres combinaisons sont bien entendu envisageables.

De plus, la surface n'est pas obligatoirement continue et peut être formée par un assemblage de plusieurs surfaces planes, de manière par exemple à former une pyramide renversée (Figure 14).

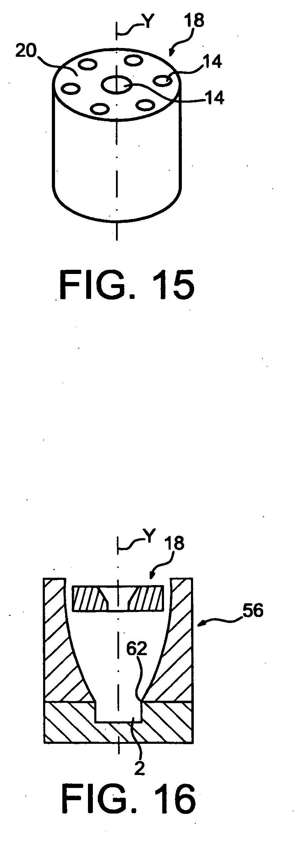

Sur la figure 15, on peut voir un exemple de réalisation d'un dispositif de répartition non couvert pas les revendications formé par un cylindre et comportant sur sa partie supérieure une surface 20 formant déflecteur, la surface étant contenue dans un plan orthogonal à l'axe X de rotation. Le dispositif comporte également plusieurs passages 14, par exemple sept dans l'exemple représenté, un passage 14 central 14 et six passages 14 disposés régulièrement autour du passage central selon un cercle. Dans cet exemple, la surface de déflexion est perpendiculaire à la direction d'écoulement du matériau granulaire. Le fonctionnement est similaire à celui déjà décrit pour les autres exemples de réalisation.

Les dispositifs selon la présente invention, sont par exemple pour les pièces mécaniques automobiles de diamètre compris entre 50 mm et 100 mm et une hauteur de 100 mm, et pour l'agroalimentaire, un diamètre de 1 m et une hauteur de 1 m.

Le dispositif selon l'invention présente l'avantage d'améliorer l'écoulement des matériaux granulaires et, par là même, d'accélérer la vitesse de remplissage des récipients. En effet, la rotation des moyens déflecteurs 18 crée un tourbillon, qui génère une aspiration du matériau granulaire en direction du récipient. Ceci permet d'éviter la mise en oeuvre de moyens complexes pour fluidiser le matériau granulaire.

Ce dispositif a également pour avantage d'assurer une reproductibilité du remplissage, ce qui peut être très important lors de la manutention de récipients de grande taille, et bien entendu dans le cas où une très grande reproductibilité de remplissage est souhaitée.

Avantageusement, notamment mais non exclusivement lorsque le dispositif de distribution 10 est disposé au dessus du récipient 2, comme représenté en figure 16 et non à l'intérieur de celui-ci, un moyen concentrateur 56 représenté sur la figure 16, est prévu entre les moyens déflecteurs 18 et le récipient 2 de manière à ce que le matériau granulaire 8 soit concentré pour rentrer dans le récipient 2. Le concentrateur permet de ramener le matériau granulaire dans le récipient, en particulier quand le récipient a des dimensions plus petites que celles du dispositif de répartition. Le moyen concentrateur 56 comporte une extrémité inférieure 62 ayant une forme correspondant à la forme de l'extrémité supérieure du récipient à remplir.

Un dispositif de remplissage selon la présente invention comporte la trémie d'alimentation 6 et le dispositif de distribution 10 selon la présente invention.

Un exemple de procédé de remplissage mettant en oeuvre le dispositif de remplissage selon la présente invention, va maintenant être exposé.

Le procédé comporte les étapes principales :
- de mise en place du dispositif de distribution 10 et de la trémie 6 en regard au dessus de l'ouverture 4 du récipient 2,
- de mise en rotation des moyens déflecteurs 18,
- d'ouverture de la trémie.

De manière plus détaillée, le procédé comporte une étape préalable de mise en place du dispositif de répartition 10 en regard de l'ouverture 4 du récipient 2.

Une étape suivante consiste à sélectionner la vitesse de rotation des moyens déflecteurs 18 de manière à adapter le remplissage à la section du récipient. La vitesse de rotation peut varier au cours de la phase de remplissage selon une séquence préétablie enregistrée dans une mémoire d'un moyen de commande

Les moyens déflecteurs sont ensuite mis en rotation selon la vitesse déterminée. Puis le ou les matériaux sous forme granulaire sont amenés par la trémie à l'entrée du dispositif de distribution.

Les granulés sont immédiatement envoyés dans le récipient. En fonction de la vitesse de rotation des moyens déflecteurs 18, une partie plus ou moins importante des granulés emprunte le passage 14, et une autre partie est déviée par les moyens déflecteurs 18.

La fin du remplissage est par exemple automatique lorsque la charge de granulés contenue dans la trémie s'est entièrement écoulée.

On peut prévoir de disposer le dispositif de distribution 10 entièrement à l'intérieur du récipient (Figure 1a à 3b) lorsque sa taille le permet.

La présente invention peut être utilisée dans de nombreux domaines, par exemple dans le domaine agro-alimentaire ou dans l'industrie pharmaceutique, dans l'industrie automobile, dans la cimenterie et dans la chimie.

## Revendications

1. Dispositif de distribution (10) d'au moins un matériau granulaire (8), comportant des moyens déflecteurs (18) d'une partie du matériau, lesdits moyens déflecteurs (18) étant mobiles en rotation autour d'un axe (X) **caractérisé en ce que** les moyens déflecteurs (18) sont formés par au moins une surface de déflexion (20) bordant au moins un passage (14), de manière à ce que la part de matériau non déviée, emprunte le passage (14), ladite surface de déflexion (20) étant inclinée en direction de l'axe de rotation (X) dans une direction générale d'écoulement du matériau.

2. Dispositif de distribution (10) selon la revendication 1, destiné à être interposé entre une source (6) d'alimentation dudit matériau granulaire (8) et un récipient (2) à remplir.

3. Dispositif de distribution (10) selon la revendication 1 ou 2, dans lequel la part de matériau déviée et la part de matériau empruntant le passage (14) sont fonction de la vitesse de rotation des moyens déflecteurs (18).

4. Dispositif de distribution selon l'une des revendications 1 à 3, dans lequel les moyens déflecteurs (18) entourent de manière continue l'extrémité d'entrée (12) dudit passage (14).

5. Dispositif de distribution selon la revendication 4, dans lequel la surface (20) est un cône dont les génératrices sont des lignes droites (30).

6. Dispositif de distribution selon l'une des revendications 1 à 4, dans lequel la surface (20) est concave.

7. Dispositif de distribution selon l'une des revendications 1 à 4, dans lequel la surface (20) est convexe.

8. Dispositif de distribution selon l'une des revendications 5 à 7 en combinaison avec la revendication 4, dans lequel la section de la surface (20) selon un plan orthogonal à l'axe (Y) est un cercle.

9. Dispositif de distribution selon l'une des revendications 5 à 7 en combinaison avec la revendication 4, dans lequel la section de la surface (20) selon un plan orthogonal à l'axe (Y) est une ellipse.

10. Dispositif de distribution selon l'une des revendications 5 à 7 en combinaison avec la revendication 4, dans lequel la section de la surface (20) selon un plan orthogonal à l'axe (Y) est sensiblement de forme rectangulaire (32").

11. Disposition de distribution selon l'une des revendications 1 à 10, dans lequel le passage (14) à la forme d'un cylindre régulier.

12. Dispositif de distribution selon l'une des revendications 1 à 10, dans lequel le passage (14) est de forme sensiblement conique orientée vers les moyens déflecteurs (18).

13. Dispositif de distribution selon l'une des revendications 1 à 10, dans lequel le passage (14) à la forme d'un cylindre de directrice ellipsoïdale.

14. Dispositif de distribution selon l'une des revendications 1 à 13, comportant un arbre central (36) coaxial à l'axe (Y) de rotation, raccordé aux moyens déflecteurs (18) par au moins un bras (38).

15. Dispositif de distribution selon l'une quelconque des revendications 1 à 13, comportant un arbre central (36) coaxial à l'axe (Y) de rotation, raccordé aux moyens déflecteurs (18) par au moins une pale (40).

16. Dispositif de distribution selon la revendication précédente, dans lequel la pale (40), est contenue dans un plan contenant l'axe (Y).

17. Dispositif de distribution selon la revendication 15, dans lequel des côtés intérieur et extérieur de la pale (40), la raccordant respectivement à l'arbre (36) et aux moyens déflecteurs (18), sont inclinés par rapport à l'axe de rotation (Y).

18. Dispositif de distribution selon l'une quelconque des revendications précédentes, dans lequel la surface (20) comporte des lumières (42), mettant en communication un espace intérieur (E) délimité par la surface (20) avec un environnement extérieur.

19. Dispositif de distribution selon la revendication précédente, dans lequel les lumières (42) sont sensiblement parallèles à l'axe (Y) et sont réparties de manière régulière angulairement autour de l'axe (Y) de rotation.

20. Dispositif de distribution selon la revendication 18 ou 19, dans lequel les lumières (42) s'étendent sur toute une hauteur du dispositif de distribution selon l'axe (Y).

21. Dispositif de distribution selon la revendication 18 ou 19, dans lequel les lumières s'étendent sur une partie seulement de la hauteur du dispositif (10).

22. Dispositif de remplissage de récipients par au moins un matériau granulaire comportant une trémie d'alimentation et un dispositif de distribution selon l'une des revendications précédentes, le dispositif de distribution (10) étant interposé entre la trémie d'alimentation et un récipient à remplir.

23. Procédé de remplissage d'un récipient par un matériau granulaire avec un dispositif selon la revendication précédente, **caractérisé en ce qu'**il comporte les étapes :
- de mise en place du dispositif de distribution (10) et de la trémie en regard de l'ouverture (4) du récipient (2);
- de mise en rotation des moyens déflecteurs (18) selon une vitesse ;
- d'alimentation en au moins un matériau granulaire (8) par ouverture de la trémie.

24. Procédé de remplissage selon la revendication précédente, dans lequel lors du remplissage la vitesse de rotation est variable selon une séquence prédéterminée.

25. Procédé de remplissage selon la revendication 23 ou 24, dans lequel le dispositif de distribution est disposé à l'intérieur du récipient.

## Claims

1. Distribution device (10) of at least one granular material (8), comprising deflector means (18) of a part of the material, said deflector means (18) being mobile in rotation around an axis (X) **characterised in that** the deflector means (18) are formed by at least one deflection surface (20) edging at least one passage (14), so that the part of material not diverted, takes the passage (14), said deflection surface (20) being inclined in the direction of the axis of rotation (X) in a general direction of flow of the material.

2. Distribution device (10) according to claim 1, intended to be interposed between a feed source (6) of said granular material (8) and a recipient (2) to be filled.

3. Distribution device (10) according to claim 1 or 2, in which the part of material diverted and the part of material taking the passage (14) depend on the speed of rotation of the deflector means (18).

4. Distribution device according to one of claims 1 to 3, in which the deflector means (18) surround in a continuous manner the end of the entrance (12) of said passage (14).

5. Distribution device according to claim 4, in which the surface (20) is a cone, the generatrixes of which are straight lines (30).

6. Distribution device according to one of claims 1 to 4, in which the surface (20) is concave.

7. Distribution device according to claims 1 to 4, in which the surface (20) is convex.

8. Distribution device according to claims 5 to 7 in combination with claim 4, in which the section of the surface (20) along a plane orthogonal to the axis (Y) is a circle.

9. Distribution device according to claims 5 to 7 in combination with claim 4, in which the section of the surface (20) along a plane orthogonal to the axis (Y) is an ellipse.

10. Distribution device according to claims 5 to 7 in combination with claim 4, in which the section of the surface (20) along a plane orthogonal to the axis (Y) is substantially of rectangular shape (32'').

11. Distribution device according to claims 1 to 10, in which the passage (14) has the shape of a regular cylinder.

12. Distribution device according to claims 1 to 10, in which the passage (14) is of substantially conical shape oriented towards the deflector means (18).

13. Distribution device according to claims 1 to 10, in which the passage (14) has the shape of an elliptic cylinder.

14. Distribution device according to claims 1 to 13, comprising a central shaft (36) coaxial to the axis (Y) of rotation, connected to the deflector means (18) by at least one arm (38).

15. Distribution device according to any of claims 1 to 13, comprising a central shaft (36) coaxial to the axis (Y) of rotation, connected to the deflector means (18) by at least one blade (40).

16. Distribution device according to the previous claim, in which the blade (40), is contained in a plane containing the axis (Y).

17. Distribution device according to claim 15, in which the inner and outer sides of the blade (40), connecting it respectively to the shaft (36) and to the deflector means (18), are inclined in relation to the axis of rotation (Y).

18. Distribution device according to any of the previous claims, in which the surface (20) comprises apertures (42), placing in communication an inner space (E) delimited by the surface (20) with an outer environment.

19. Distribution device according to the previous claim, in which the apertures (42) are substantially parallel to the axis (Y) and are distributed out in a regular manner angularly around the axis (Y) of rotation.

20. Distribution device according to claim 18 or 19, in which the apertures (42) extend over all a height of the distribution device along the axis (Y).

21. Distribution device according to claim 18 or 19, in which the apertures extend over a part only of the height of the device (10).

22. Device for filling recipients by at least one granular material comprising a feed hopper and a distribution device according to one of the previous claims, the distribution device (10) being interposed between the feed hopper and a recipient to be filled.

23. Method of filling a recipient by a granular material with a device according to the previous claim, **characterised in that** it comprises the steps:
- putting in place the distribution device (10) and the hopper opposite the opening (4) of the recipient (2);
- bringing into rotation the deflector means (18) according to a speed;
- feeding at least one granular material (8) by opening of the hopper.

24. Filling method according to the previous claim, in which during the filling the speed of rotation is variable according to a predetermined sequence.

25. Filling method according to claim 23 or 24, in which the distribution device is arranged inside the recipient.

## Patentansprüche

1. Ausgabevorrichtung (10) mindestens eines granulatförmigen Materials (8) mit Einrichtungen (18) zur Ablenkung eines Teils des Materials, wobei diese Ablenkeinrichtungen (18) um eine Achse (X) rotieren können,
**dadurch gekennzeichnet, dass** die Ablenkeinrichtungen (18) durch mindestens eine Ablenkfläche (20) gebildet werden, die mindestens einen Durchgang (14) einfasst, so dass der nicht abgelenkte Teil des Materials den Durchgang (14) benutzt, wobei die genannte Ablenkfläche (20) in Richtung der Rotationsachse (X) geneigt ist in einer Hauptabflussrichtung des Materials.

2. Ausgabevorrichtung (10) nach Anspruch 1, vorgesehen zwischen einer Speisungsquelle (6) des genannten granulatförmigen Materials (8) und einem zu füllenden Behälter (2).

3. Ausgabevorrichtung (10) nach Anspruch 1 oder 2, bei der der abgelenkte Teil des Materials und der den Durchgang (14) benutzende Teil des Materials abhängig sind von der Drehgeschwindigkeit (ω) der Ablenkeinrichtungen (18).

4. Ausgabevorrichtung nach einem der Ansprüche 1 bis 3, bei der die Ablenkeinrichtungen (18) das Eingangsende (12) des genannten Durchgangs (14) kontinuierlich umgeben.

5. Ausgabevorrichtungen (10) nach Anspruch 4, bei der die Fläche (20) ein Konus ist, dessen kegelmanteln gerade Linien (30) sind.

6. Ausgabevorrichtung nach einem der Ansprüche 1 bis 4, bei der die Fläche (20) konkav ist.

7. Ausgabevorrichtung nach einem der Ansprüche 1 bis 4, bei der die Fläche (20) konvex ist.

8. Ausgabevorrichtung nach einem der Ansprüche 5 bis 7 in Verbindung mit Anspruch 4, bei welcher der einer zur Achse (Y) senkrechten Ebene entsprechende Querschnitt der Fläche (20) ein Kreis ist.

9. Ausgabevorrichtung nach einem der Ansprüche 5 bis 7 in Verbindung mit Anspruch 4, bei welcher der einer zur Achse (Y) senkrechten Ebene entsprechende Querschnitt der Fläche (20) eine Ellipse ist.

10. Ausgabevorrichtung nach einem der Ansprüche 5 bis 7 in Verbindung mit Anspruch 4, bei der der einer zur Achse (Y) senkrechten Ebene entsprechende Querschnitt der Fläche (20) eine im Wesentlichen rechteckige Form (32") aufweist.

11. Ausgabevorrichtung nach einem der Ansprüche 1 bis 10, bei der der Durchgang (14) die Form eines regelmäßigen Zylinders hat.

12. Ausgabevorrichtung nach einem der Ansprüche 1 bis 10, bei der der Durchgang (14) eine in Richtung Ablenkeinrichtungen (18) im Wesentlichen konische Form hat.

13. Ausgabevorrichtung nach einem der Ansprüche 1 bis 10, bei der der Durchgang (14) die Form eines Zylinders mit ellipsenförmiger Querschnitt hat.

14. Ausgabevorrichtung nach einem der Ansprüche 1 bis 13 mit einer zentralen, zur Achse (Y) koaxialen Rotationswelle (36), die durch wenigstens einen Arm (38) mit den Ablenkeinrichtungen (18) verbunden ist.

15. Ausgabevorrichtung nach einem der Ansprüche 1 bis 13 mit einer zentralen, zur Achse (Y) koaxialen Rotationswelle (36), die durch wenigstens ein Schaufelblatt (40) mit den Ablenkeinrichtungen (18) verbunden ist.

16. Ausgabevorrichtung nach dem vorangehenden Ansprüche, bei der das Schaufelblatt (40) in einer die Achse (Y) enthaltenden Fläche enthalten ist.

17. Ausgabevorrichtung nach Anspruch 15, bei dem die Innen- und die Außenseite des Schaufelblatts (40), die es jeweils mit der Welle (36) und mit den Ablenkeinrichtungen (18) verbinden, geneigt sind in Bezug auf die Rotationsachse (Y).

18. Ausgabevorrichtung nach einem der vorangehenden Ansprüche, bei der die Fläche (20) Schlitzlöcher (42) umfasst, die einen durch die Fläche (20) abgegrenzten Innenraum (E) mit einer Außenumgebung verbinden.

19. Ausgabevorrichtung nach einem der vorangehenden Ansprüche, bei der die Schlitzlöcher (42) im Wesentlichen parallel zu der Achse (Y) sind und winkelmäßig gleichmäßig um die Rotationsachse (Y) herum verteilt sind.

20. Ausgabevorrichtung nach Anspruch 18 oder 19, bei der die Schlitzlöcher (42) sich entsprechend der Achse (Y) über eine gesamte Höhe der Ausgabevorrichtung erstrecken.

21. Ausgabevorrichtung nach Anspruch 18 oder 19, bei der die Schlitzlöcher (42) sich nur über einen Teil der Höhe der Ausgabevorrichtung (10) erstrecken.

22. Vorrichtung zum Füllen von Behältern mit wenigstens einem granulatförmigen Material, umfassend einen Einspeisungstrichter und eine Ausgabevorrichtung nach einem der vorangehenden Ansprüche, wobei die Ausgabevorrichtung (10) zwischen dem Einspeisungstrichter und einem zu füllenden Behälter vorgesehen ist.

23. Verfahren zum Füllen von Behältern mit einem granulatförmigen Material mit einer Vorrichtung nach dem vorangehenden Anspruch, **dadurch gekennzeichnet, dass** es die folgenden Schritte umfasst:
- Platzieren der Ausgabevorrichtung (10) und des Trichters gegenüber der Öffnung (4) des Behälters (2);
- Versetzen der Ablenkeinrichtungen (18) in eine Rotation gemäß einer Geschwindigkeit;
- Einspeisen wenigstens eines granulatförmigen Materials (8) durch Öffnen des Trichter.

24. Füllverfahren nach dem vorangehenden Anspruch, bei dem beim Füllen die Drehgeschwindigkeit variabel ist gemäß einer vorher festgelegten Sequenz.

25. Füllverfahren nach Anspruch 23 oder 24, bei dem die Ausgabevorrichtung im Innern des Behälters angeordnet ist.
